# EUROPEAN PATENT SPECIFICATION

(11) **EP 4 122 642 B1**
(45) Date of publication and mention of the grant of the patent: **17.04.2024**
(21) Application number: 22185042.3
(22) Date of filing: 14.07.2022
(51) Int. Cl.: B23Q 1/03, B23Q 1/58, B23Q 11/08, F16C 29/08

(54) **APPARATUS FOR POSITIONING WORKPIECE CLAMPING ELEMENTS**
VORRICHTUNG ZUM POSITIONIEREN VON WERKSTÜCKSPANNELEMENTEN
DISPOSITIF DE POSITIONNEMENT D'ELEMENTS DE SERRAGE DE PIÈCES.

(30) Priority: 20.07.2021 IT 202100019238
(43) Date of publication of application: 25.01.2023
(73) Proprietor: C.M.S. S.p.A., 24019 Zogno (BG) (IT)
(72) Inventor: CIT, Pierangelo, 47923 Rimini (IT)
(74) Representative: Luppi Intellectual Property S.r.l.

(56) References cited:
- EP-A2- 0 949 044
- WO-A1-2012/091559
- DE-C1- 10 009 026
- US-B1- 6 200 030

## Description

### Background of the invention

The invention relates to an apparatus for positioning workpiece clamping elements for machining centres, in particular, an apparatus for clamping at least one workpiece that has to be machined in a numerical control machining centre.

In particular, the present invention relates to an apparatus comprising a plurality of workpiece clamping elements, for example of the depression type (suction cups), that are positionable so as to define a clamping surface configured to maintain a workpiece firmly in the machining position, in which each clamping element is carried by a slider (slide) fitted on a support (bar) extending at least along one longitudinal direction and in which the slider is movable on said support and is configured to position the workpiece clamping element in a predefined work position. The support can be movable in a direction that is transverse to said longitudinal direction. Depending on machining needs and the type of machine, the aforesaid elements of the apparatus can also be arranged and moved differently.

Machining centres are known comprising a work plane with clamping elements, for example suction cups or clamps, which are arranged in desired positions and by means of which a workpiece being machined is clamped.

Machining, in general, produces dust and/or chips, which may come into contact with delicate and alterable components of the machining centre, affecting normal operation and decreasing production efficiency, also with the risk of polluting the work environment, seriously compromising the health of operators.

In particular, in machining centres that are usable, for example, for machining marble or glass, a critical point consists of protecting some components such as the guide and motion transmission elements not only from the chippings but also from the machining fluid that is used to machine the workpiece and lower the temperature of the machining tool and which could penetrate inside and corrode the components. This drawback also occurs in waterjet machining centres, in which cutting is performed by a fluid (water) jet mixed with an abrasive component.

US 6 200 030 B1 discloses an apparatus comprising:
- at least one support defining at least one inner zone to be protected from external elements;
- at least one slider configured to carry at least one workpiece clamping element and which is movable on said support;
- at least one seal which comprises a variable shape cavity and which is capable of assuming an expanded configuration, in which said at least one seal is in contact with said at least one slider and provides a sealing to protect said at least one inner zone, and at least one retracted configuration, in which said seal allows said at least one slider to move on said support. DE 100 09 026 C1 discloses a method of positioning workpiece clamping elements.

In order to protect, in particular from the fluid and the chips, some components of a bar support plane, it is known to arrange sealing means extending in length parallel to the bars.

One of the problems of the prior art is to avoid generating friction that extends between the aforesaid sealing means and the moving parts of the bar plane, in particular during positioning of the clamping elements in the desired position.

### Summary of the invention

One object of the present invention is to overcome the drawbacks of the prior art disclosed above.

One object of the invention is to guarantee a suitable seal for protecting, during machining, components of a machining centre, for example guide elements, motion transmitting members and moving members, from external elements, in particular from the machining fluid and from the machining chips, and to facilitate the movement of moving parts (sliders that carry the clamping elements) of the machining centre during positioning of the workpiece clamping elements.

One advantage of the present invention is to provide openable seal means to allow the moving parts of the machining centre to be moved, limiting or eliminating the friction between the seal means and the moving parts, in particular in order to extend the lifetime of the various components that are subject to wear.

Such objects and advantages, and still others, are achieved by an apparatus and a method according to the claims.

In one embodiment, an apparatus for positioning workpiece clamping elements comprises at least one inner zone to be protected from the entry of fluids and/or solids during machining of the workpiece, a slider configured to carry a workpiece clamping element and which is movable for positioning the workpiece clamping element, at least one seal comprising a variable shape cavity that is able to assume an expanded configuration, in which the seal is in contact with the slider and provides a sealing to protect said inner zone, and at least one retracted configuration, in which the seal permits a movement of the slider without friction between the slider and the seal, and with suction means for generating a depression in said cavity so that the seal assumes said retracted configuration.

In one embodiment, an apparatus for positioning workpiece clamping elements comprises at least one support extending at least along one longitudinal direction and defining at least one inner zone to be protected from external elements, in particular against the entry of liquids and/or solid objects during machining of a workpiece, at least one slider which is configured to carry at least one workpiece clamping element and which is movable on said support along said longitudinal direction, at least two seals, each of which comprises a variable shape cavity and is capable of assuming an expanded configuration, in which the seals are in contact with one another and in contact with said slider to make a sealing to protect said inner zone, and a retracted configuration, in which the seals are far from one another and from said slider and allow said slider to move on said support along said longitudinal direction without generating friction between slider and seal, and suction means for generating a depression in said cavity such that said seal assumes said retracted configuration.

The sealing can be further made also by using a single seal that comes into contact with the slider, which can also have a different shape from the shape used in said apparatus according to the embodiment disclosed in the detailed description.

### Short description of the drawings

The invention can be better understood and implemented with reference to the attached drawings which illustrate one embodiment thereof by way of non-limiting example, in which:
figure 1 shows an axonometric view of a machining centre comprising an apparatus for positioning workpiece clamping elements according to the invention;
figure 2 shows a section of an apparatus for positioning workpiece clamping elements of figure 1 in which it is possible to see the seals in the extended configuration thereof and the inner zone C;
figure 3 is an enlarged view of figure 2 in which it is possible to observe the contact between two opposite seals following deformation of the sealing side of the hollow section-shaped body of said seals;
figure 4 shows a section of an apparatus for positioning workpiece clamping elements of figure 1 in which it is possible to see the seals in the retracted configuration thereof and the inner zone C;
figure 5 is an enlarged view of figure 4 in which it is possible to observe the seals in the retracted configuration thereof where the oblique sides are more inclined whereas the curved side is more flattened than the expanded configuration thereof;

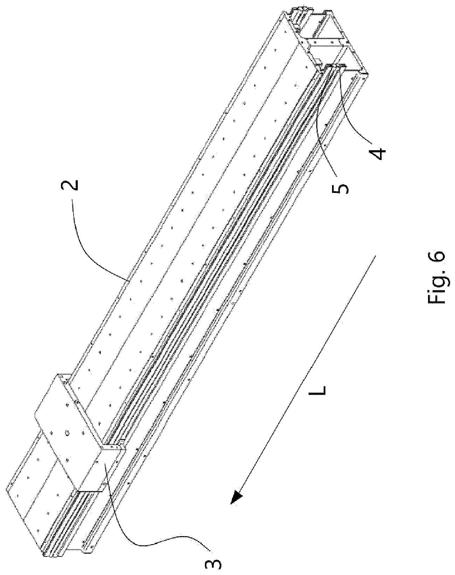

figure 6 shows an axonometric view of an apparatus for positioning workpiece clamping elements of figure 1 in which it is possible to observe a support that extends in a longitudinal direction L, a slider fitted on said slidable support along said direction and two pairs of seals mounted on said support to make a sealing;
figure 7 shows a seal according to the invention comprising a hollow section-shaped body extending along said longitudinal direction L;
figure 8 shows a section of the seal of figure 7 in which it is possible to observe the oblique sides, the deformable sealing side and the hinges made on said oblique sides by localized thinning of the thickness;

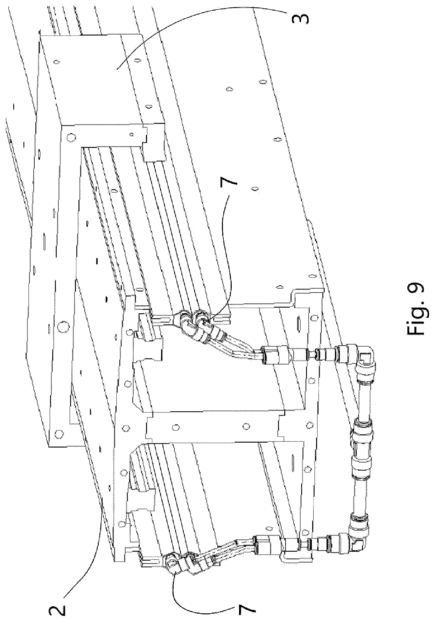

figure 9 shows another axonometric view of an apparatus for positioning workpiece clamping elements of figure 1 in which suction means for generating a depression in said cavity is visible;
figure 10 shows a view in a longitudinal section of an apparatus according to the invention in which some elements are clearly visible that make up the movement system that enables the sliders to slide along the support like an electric motor, a belt transmission and a screw transmission;
figure 11 shows a section view of an apparatus according to the invention shown in figure 10 in which other inner components are visible of the movement system like a spiral, coupled with the transmission screw, a pad, a guide and a cable-holding chain.

### Detailed description

With reference to the aforementioned figures, an apparatus 1 is described for positioning workpiece clamping elements to maintain in position a workpiece to be machined. In particular, said apparatus 1 is usable in a machining centre 10, like a machining centre for removing material and/or an additive manufacturing machining centre. In said machining centres 10, it is further possible to provide a plurality of said apparatuses 1 for positioning and/or maintaining a workpiece with a surface of various shapes and sizes, of different materials, for example marble, glass, aluminium, plastics, composite materials, ceramic materials, etc.

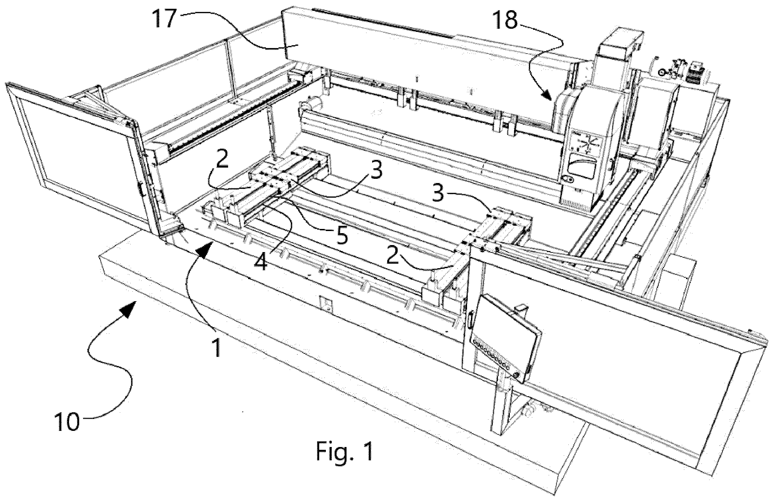

In the specific embodiment of figure 1, the machining centre 10 consists of a work plane on which are positioned, in particular, four apparatuses 1 for automatic positioning of workpiece clamping elements, a machining head 18 fitted slidably on a movable crosspiece 17 and comprising a tool and a device for adduction of fluid to cool the tool and/or the workpiece being machined (not shown in figures).

Each apparatus 1 can be arranged, in particular, slidingly along the guides on the work plane and movement can be manual or motor-driven. The machining head that is movable along the crosspiece can further move, in particular, independently along a (vertical) third axis transverse to the longitudinal direction L of the apparatus and to the sliding direction of the machining head on the crosspiece.

In particular, the apparatus 1 can comprise one or more clamping elements fitted on one or more sliders 3 that are configured to position the workpiece clamping element in a predefined work position. The sliders 3 can in turn be fitted, in particular, on a support 2 provided with guides that extends, in particular, in a longitudinal direction L.

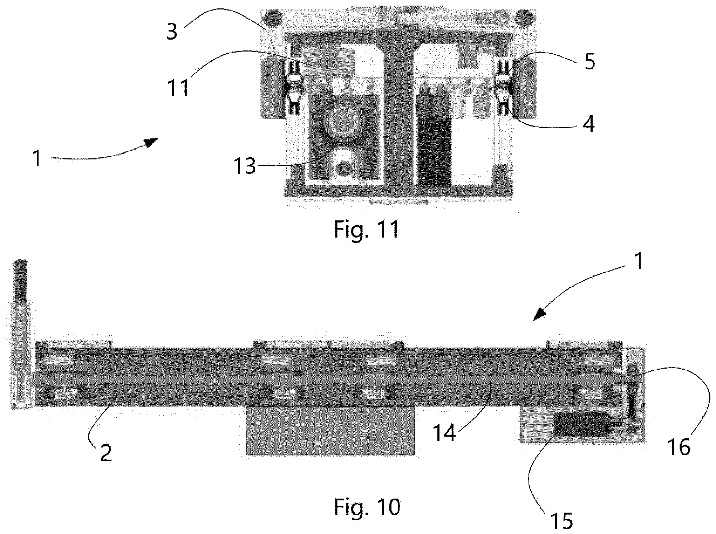

The movement system for moving the sliders along the longitudinal profile of the support 2 is shown in figures 10 and 11 and consists of an electric motor 15, which rotates a screw 14 by a belt transmission 16 mechanism, a spiral 13 that engages the screw by a clamping piston, a guide and a pad 11 connected to the slider 3. Other movement systems can include linear motors on the sliders or rack systems or the sliders can simply be positioned manually.

The movements of the support 2 and of the sliders 3 have the function of positioning the clamping elements, for example suction cups, in specific points of the work plane of the machining centre 1 so as to define a clamping surface to maintain the workpiece to be machined firmly in the preset position.

The support can further define, in particular, an inner zone C, which have to be protected from external elements like fluids and/or solids during the machining of the workpiece. Inside said inner zone C, in fact, some components may be necessary for the operation of the apparatus, for example guide and motion transmission elements, disclosed above, that can get damaged, in particular, by the machining fluid and the machining chips.

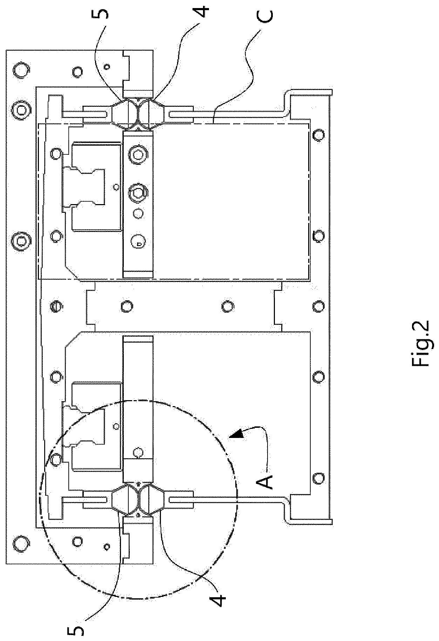

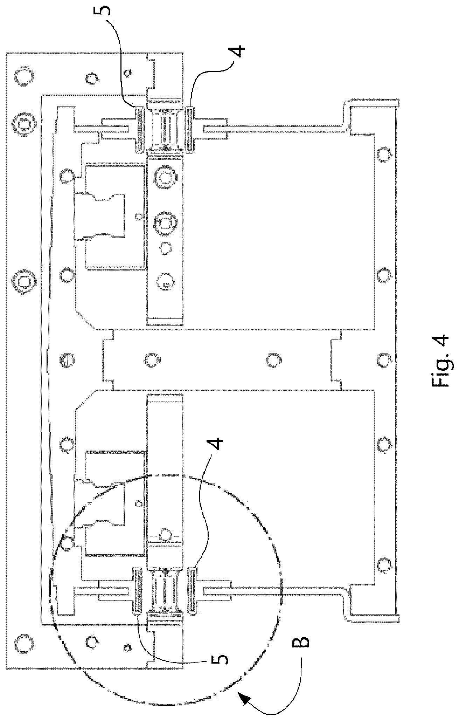

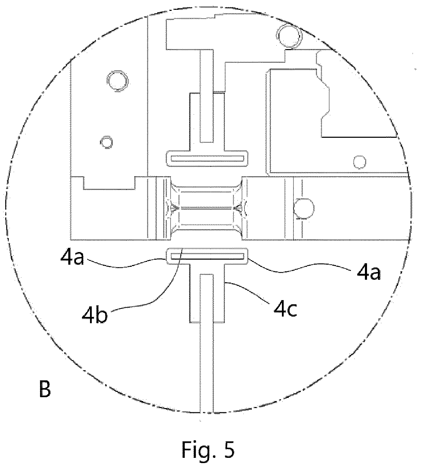

The apparatus 1 for positioning clamping elements, moreover, as shown clearly in figures 2, 3, 4 and 5, can be provided, in particular, with a plurality of seals, like for example at least one seal 4 and at least one further seal 5, fitted on the support 2, in particular, in a manner opposite one another, at the sliders 3, to create a sealing and protect the components inside the inner zone C.

Later on in the description reference is made, in particular, to just the seal 4, it being understood that the features and operation disclosed below can also be present in the further seal 5.

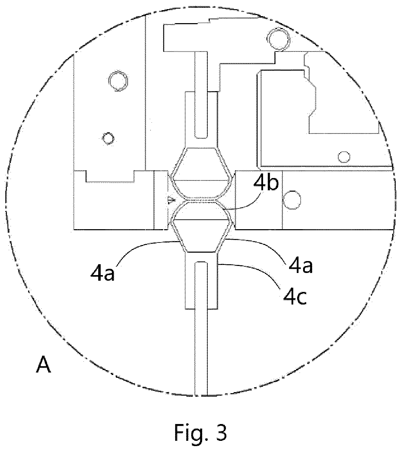

The seal 4 can be provided, in particular, with a variable shape cavity 8 which, owing to the geometry thereof which will be disclosed below, is capable of assuming an expanded configuration A, which is clearly visible in figures 2 and 3, in which the seal 4 is in contact with the further seal 5 and with the slider 3 to make the sealing, and a retracted configuration B, in which the seal 4 allows the slider 3 to move on the support 2 without generating friction.

The seal 4, in addition to ensuring a sealing of the inner zone C, can ensure, in particular, also a static seal of the slider 3, preventing shifts of the slider 3 during machining.

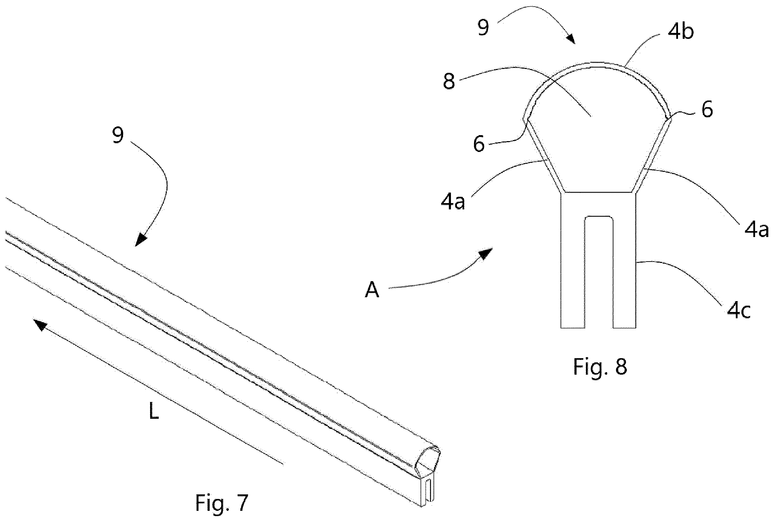

The seal 4, as illustrated in figures 7 and 8, can comprise, in particular, a hollow section-shaped body 9 extending along the longitudinal direction L and consisting, in particular, of two oblique sides 4a and a deformable sealing side 4b that joins the two oblique sides 4a. The oblique sides 4a can have, in particular, opposite inclinations and can diverge towards the sealing side 4b.

In figure 3 it can be seen how the sealing sides 4b of the seal 4, in the expanded configuration A thereof, can deform, in particular, at the contact portion between the two seals, creating a contact surface and thus making the sealing.

The suction means 7, for example liquid ring vacuum pumps, diaphragm pumps or electric vacuum pumps, connected to the seal 4, have the function of generating a depression inside the cavity 8 so as to force the seal 4 to assume a retracted configuration B when required. The oblique sides 4a and the sealing side 4b of the body 9 of the seal 4, are thus, in this configuration, more inclined and flattened than the expanded configuration A and the contact between the seal 4 and the slider 3 may cease to exist.

The suction means 7 may comprise, in particular, a pneumatic circuit provided with valves, vents, filters, etc.

The seal 4, at the connection portion of each oblique side 4a with the sealing side 4b (and possibly also at the connection portion of each oblique side 4a with the base 4c), comprise a hinge portion 6, clearly visible in figure 8, that is made by localized thinning of the thickness. Each hinge portion 6 can comprise, in particular, an axis parallel to the longitudinal direction L. The hinges, following the application of the vacuum, facilitate the inclination of the oblique sides 4a, so as to make the body 9 collapse, bringing the deformable sealing side 4b near such that the sealing side 4b is more flattened than the expanded configuration A.

Each seal (in particular the seal 4 and/or the further seal 5) can also have a different shape from the shape disclosed above. It is nevertheless possible that, following the application of the vacuum, the body 9 of the seals collapses, in particular in a substantially horizontal manner, enabling each seal to move away from the slider 3.

Each seal, in order to return to the expanded configuration A (at rest), normally, might not need a pressurized fluid after the application of the vacuum. Expansion can occur owing to the elastic return of the material of which the seals are made, generally polymeric material. But after a few work cycles, these seals may deform plastically and no long achieve an effective and efficient seal with the slider.

For this reason the apparatus 1 can comprise, in particular, also compression means (not shown in the figures) connected to each seal for generating an overpressure inside the variable shape cavity 8 to improve the sealing during the expanded configuration A.

Inside a numerical control machining centre 10, the apparatus 1 for positioning workpiece clamping elements is configured to position at least one workpiece clamping element in a predefined position, the latter carried by a slider 3 that is movable on a support 2 extending in a longitudinal direction L.

Before the start of machining of the workpiece, at least one seal 4 is arranged that is provided with a variable shape cavity 8, that is liable to take on an expanded configuration A and at least one retracted configuration B, along the longitudinal profile of the support 2 of the apparatus 1.

The apparatus 1 for positioning workpiece clamping elements is configured to machine a workpiece whilst the workpiece is clamped on said workpiece clamping element and whilst each seal is in the expanded configuration A in which the seal is in contact with the slider 3 to make a seal and protect the delicate and alterable components of the machining centre 10, like the guide and motion transmission elements, from the chips and/or from the machining fluid that is used to machine the workpiece.

The apparatus 1 for positioning workpiece clamping elements is configured to generate a depression inside the cavity 8 of each seal, after machining of the workpiece in the numerical control machining centre 10, to allow each seal to assume a retracted configuration B, in which the seal 4 is configured to move said slider 3, and to position said workpiece clamping element in another predefined position, in particular without generating friction between each seal and the slider 3.

After this movement step and before the start of a new machining step, the apparatus 1 for positioning workpiece clamping elements interrupts the step of generating said depression so as to induce each seal again to assume the expanded configuration A, owing to the elastic return of the polymeric material, to restore the sealing.

Further, after the interrupting step to interrupt the depression generation, the compression means can generate an overpressure inside the cavity 8 to improve the sealing when each seal is in the expanded configuration A.

As can be seen from what has been disclosed above, the positioning apparatus 1 for positioning clamping elements according to the present invention enables the limits and drawbacks of the prior art to be overcome.

The apparatus 1 for positioning clamping elements according to the invention is particularly useful to position correctly (and, in particular, in an automated manner) workpiece clamping elements to maintain a workpiece being machined. This occurs owing to the presence of openable seal means (seals) that enable the slider 3 to slide in a facilitated manner inasmuch as there is no contact with the seal profiles and friction is not developed so that the lifetime of the components is extended.

Further, once the vacuum is released, each seal can return to the original shape, ensuring, in addition to the sealing of the inner zone, also a static seal of the slider 3, preventing shifts of the slider 3 during machining.

The apparatus ensures an optimum seal against the entrance of water or liquids into the inner zone C where sensitive components are present.

Despite this, the apparatus 1 for positioning workpiece clamping elements is a simple and economic solution both in terms of components and maintenance.

## Claims

1. Apparatus for positioning workpiece clamping elements (1), said apparatus comprising:
- at least one support (2) extending at least along one longitudinal direction (L) and defining at least one inner zone (C) to be protected from external elements, in particular against the entry of solid objects or liquids during machining of the workpiece;
- at least one slider (3) which is configured to carry at least one workpiece clamping element and which is movable on said support (2) along said longitudinal direction (L) for the positioning of said at least one workpiece clamping element;
- at least one seal (4) which comprises a variable shape cavity (8) and which is capable of assuming an expanded configuration (A), in which said at least one seal (4) is in contact with said at least one slider (3) and provides a sealing to protect said at least one inner zone (C), and at least one retracted configuration (B), in which said seal (4) allows said at least one slider (3) to move on said support (2) along said longitudinal direction (L) without generating friction between said slider (3) and said seal (4);
- suction means (7) for generating a depression in said cavity (8) so that said at least one seal (4) assumes said retracted configuration (B).

2. Apparatus (1) according to claim 1, wherein, when the pressure in said cavity (8) is equal to atmospheric pressure, said at least one seal (4) assumes said expanded configuration (A).

3. Apparatus (1) according to claim 1 or 2 wherein said at least one seal (4) assumes said expanded configuration (A) when an overpressure is generated in said cavity (8).

4. Apparatus (1) according to any one of the preceding claims, comprising a further seal (5) which is opposed to said at least one seal (4) and which is capable of assuming an expanded configuration (A), in which said further seal (5) is in contact with said at least one slider (3) and/or with said at least one seal (4) and in which provides a sealing to protect said at least one inner zone (C), and at least one retracted configuration (B), in which said further seal (5) allows said at least one slider (3) to move on said support (2) along said longitudinal direction (L) without generating friction between the slider (3) and said further seal (5).

5. Apparatus (1) according to claim 4, wherein said further seal (5) and at least one seal (4) move away from each other assuming the respective said retracted configurations (B) and approach each other assuming the respective said expanded configurations (A).

6. Apparatus (1) according to claim 4 or 5, wherein said at least one seal (4) and further seal (5) extend along said longitudinal direction (L) and/or are fitted on said support (2).

7. Apparatus (1) according to any one of claims 4 to 6, wherein said further seal (5) comprises a hollow section-shaped body (9) extended along said longitudinal direction (L), said body (9) comprising, in said expanded configuration (A), two oblique sides (4a), a sealing side (4b) which joins together said two oblique sides (4a) and a base (4c) which is common to said oblique sides (4a), said two oblique sides (4a) being inclined with opposite inclinations so as to diverge proceeding towards said sealing side (4b), said sealing side (4b) being deformable so as to provide said sealing in said expanded configuration (A).

8. Apparatus (1) according to any one of the preceding claims, wherein said at least one seal (4) comprises a hollow section-shaped body (9) extending along said longitudinal direction (L), said body (9) comprising, in said expanded configuration (A), two oblique sides (4a), a sealing side (4b) which joins together said two oblique sides (4a) and a base (4c) which is common to said oblique sides (4a), said two oblique sides (4a) being inclined with opposite inclinations so as to diverge proceeding towards said sealing side (4b), said sealing side (4b) being deformable so as to provide said sealing in said expanded configuration (A).

9. Apparatus (1) according to claim 7 or 8, wherein, in said retracted configuration (B), said oblique sides (4a) are more inclined than in said expanded configuration (A) and said sealing side (4b) is more flattened than in said expanded configuration (A).

10. Apparatus (1) according to any one of claims 7 to 9, wherein each of said oblique sides (4a) comprises a hinge portion (6) comprising a hinge axis parallel to said longitudinal direction (L), and in which, for each of said oblique sides (4a), said hinge portion (6) connects the respective oblique side (4a) with said sealing side (4b).

11. Apparatus (1) according to claim 10, wherein each of said hinge portions (6) is made by a localized thinning of thickness.

12. Apparatus (1) according to any one of the preceding claims, comprising compression means connected to said at least one seal (4) for generating an overpressure in said cavity (8) to improve the sealing in said expanded configuration (A).

13. Numerical control machining centre (10), comprising a work plane configured for positioning a workpiece, said work plane comprising an apparatus (1) made according to any one of the preceding claims.

14. Method of positioning workpiece clamping elements, comprising the steps of:
- positioning at least one workpiece clamping element in a predefined position, said at least one workpiece clamping element being carried by a movable slider (3) on a support (2) extended in a longitudinal direction (L);
- arranging at least one seal (4) on said support (2) along said longitudinal direction (L), said at least one seal (4) comprising a variable shape cavity (8) which is capable of assuming an expanded configuration (A) and at least one retracted configuration (B);
- machining a workpiece clamped on said at least one workpiece clamping element;
- during said machining step, arranging said at least one seal (4) in said expanded configuration (A), in which said at least one seal (4) is in contact with said support (2) and said slider (3) to provide a sealing between said slider (3) and said at least one seal (4);
- generating a depression in said cavity (8) so that, during said positioning step, said at least one seal (4) assumes said retracted configuration (B) in which said at least one seal (4) is configured to move said slider (3) on said support (4) along said longitudinal direction (L) without generating friction between slider (3) and seal (4).

15. Method according to claim 14, comprising, after said positioning step, an interrupting step to interrupt said step of generating a depression so as to induce said seal (4) to assumes said expanded configuration (A) and to re-establish the sealing; in particular, said method comprising, after said interrupting step, generating an overpressure in said cavity (8) so as to improve said sealing.

## Patentansprüche

1. Vorrichtung zum Positionieren von Werkstück-Spannelementen (1), wobei die Vorrichtung umfasst:
- wenigstens einen Halter (2), der sich wenigstens in einer Längsrichtung (L) erstreckt und wenigstens einen Innenbereich (C) definiert, der vor äußeren Einflüssen, insbesondere vor dem Eindringen von festen Gegenständen oder Flüssigkeiten während der Bearbeitung des Werkstücks, zu schützen ist
- wenigstens einen Schieber (3), der so konfiguriert ist, dass er wenigstens ein Werkstück-Spannelement trägt, und der auf dem Halter (2) entlang der Längsrichtung (L) zur Positionierung des wenigstens einen Werkstück-Spannelements beweglich ist;
- wenigstens eine Dichtung (4), die einen formveränderlichen Hohlraum (8) aufweist und die eine expandierte Konfiguration (A) annehmen kann, in der die wenigstens eine Dichtung (4) in Kontakt mit dem wenigstens einen Schieber (3) steht und eine Abdichtung zum Schutz des wenigstens einen Innenbereichs (C) bereitstellt, und wenigstens eine eingefahrene Konfiguration (B), in der die Dichtung (4) es dem wenigstens einen Schieber (3) ermöglicht, sich auf dem Halter (2) entlang der Längsrichtung (L) zu bewegen, ohne Reibung zwischen dem Schieber (3) und der Dichtung (4) zu erzeugen;
- Ansaugmittel (7) zur Erzeugung eines Unterdrucks in dem Hohlraum (8), so dass die wenigstens eine Dichtung (4) die eingefahrene Konfiguration (B) annimmt.

2. Vorrichtung (1) nach Anspruch 1, bei der, wenn der Druck in dem Hohlraum (8) gleich dem atmosphärischen Druck ist, die wenigstens eine Dichtung (4) die expandierte Konfiguration (A) annimmt.

3. Vorrichtung (1) nach Anspruch 1 oder 2, bei der die wenigstens eine Dichtung (4) die expandierte Konfiguration (A) annimmt, wenn in dem Hohlraum (8) ein Überdruck erzeugt wird.

4. Vorrichtung (1) nach einem der vorstehenden Ansprüche, umfassend eine weitere Dichtung (5), die der wenigstens einen Dichtung (4) gegenüberliegt und die in der Lage ist, eine expandierte Konfiguration (A) anzunehmen, in der die weitere Dichtung (5) in Kontakt mit dem wenigstens einen Schieber (3) und/oder mit der wenigstens einen Dichtung (4) steht und eine Abdichtung zum Schutz des wenigstens einen Innenbereichs (C) bereitstellt, und wenigstens eine eingefahrene Konfiguration (B), in der die weitere Dichtung (5) es dem wenigstens einen Schieber (3) ermöglicht, sich auf dem Halter (2) entlang der Längsrichtung (L) zu bewegen, ohne Reibung zwischen dem Schieber (3) und der weiteren Dichtung (5) zu erzeugen.

5. Vorrichtung (1) nach Anspruch 4, bei der sich die weitere Dichtung (5) und die wenigstens eine Dichtung (4) voneinander weg bewegen, wenn sie die jeweiligen eingefahrenen Konfigurationen (B) einnehmen, und sich einander annähern, wenn sie die jeweiligen expandierten Konfigurationen (A) einnehmen.

6. Vorrichtung (1) nach Anspruch 4 oder 5, bei der sich die wenigstens eine Dichtung (4) und die weitere Dichtung (5) entlang der Längsrichtung (L) erstrecken und/oder an dem Halter (2) angebracht sind.

7. Vorrichtung (1) nach einem der Ansprüche 4 bis 6, bei der die weitere Dichtung (5) einen hohlprofilförmigen Körper (9) aufweist, der sich entlang der Längsrichtung (L) erstreckt, wobei der Körper (9) in der expandierten Konfiguration (A) zwei schräge Seiten (4a) aufweist, eine Dichtungsseite (4b), die die beiden schrägen Seiten (4a) miteinander verbindet, und eine Basis (4c), die den schrägen Seiten (4a) gemeinsam ist, wobei die beiden schrägen Seiten (4a) mit entgegengesetzten Neigungen geneigt sind, so dass sie in Richtung der Dichtungsseite (4b) divergieren, wobei die Dichtungsseite (4b) verformbar ist, um die Dichtung in der expandierten Konfiguration (A) bereitzustellen.

8. Vorrichtung (1) nach einem der vorstehenden Ansprüche, bei der die wenigstens eine Dichtung (4) einen hohlprofilförmigen Körper (9) umfasst, der sich entlang der Längsrichtung (L) erstreckt, wobei der Körper (9) in der expandierten Konfiguration (A) zwei schräge Seiten (4a) umfasst, eine Dichtungsseite (4b), die die beiden schrägen Seiten (4a) miteinander verbindet, und eine Basis (4c), die den schrägen Seiten (4a) gemeinsam ist, wobei die beiden schrägen Seiten (4a) mit entgegengesetzten Neigungen geneigt sind, so dass sie in Richtung der Dichtungsseite (4b) divergieren, wobei die Dichtungsseite (4b) verformbar ist, um die Dichtung in der expandierten Konfiguration (A) bereitzustellen.

9. Vorrichtung (1) nach Anspruch 7 oder 8, bei der in der eingefahrenen Konfiguration (B) die schrägen Seiten (4a) stärker geneigt sind als in der expandierten Konfiguration (A) und die Dichtungsseite (4b) stärker abgeflacht ist als in der expandierten Konfiguration (A).

10. Vorrichtung (1) nach einem der Ansprüche 7 bis 9, bei der jede der schrägen Seiten (4a) einen Scharnierabschnitt (6) mit einer zur Längsrichtung (L) parallelen Scharnierachse aufweist, und in der für jede der schrägen Seiten (4a) der Scharnierabschnitt (6) die jeweilige schräge Seite (4a) mit der Dichtungsseite (4b) verbindet.

11. Vorrichtung (1) nach Anspruch 10, wobei jeder der Scharnierabschnitte (6) durch eine örtliche Dickenausdünnung hergestellt ist.

12. Vorrichtung (1) nach einem der vorstehenden Ansprüche, umfassend ein mit der wenigstens einen Dichtung (4) verbundenes Kompressionsmittel zur Erzeugung eines Überdrucks in dem Hohlraum (8), um die Abdichtung in der expandierten Konfiguration (A) zu verbessern.

13. Bearbeitungszentrum (10) mit numerischer Steuerung, das eine Arbeitsebene umfasst, die zum Positionieren eines Werkstücks konfiguriert ist, wobei die Arbeitsebene eine Vorrichtung (1) nach einem der vorstehenden Ansprüche umfasst.

14. Verfahren zum Positionieren von Werkstück-Klemmelementen, umfassend die Schritte:
- Positionieren wenigstens eines Werkstück-Spannelementes in einer vordefinierten Position, wobei das wenigstens eine Werkstück-Spannelement von einem bewegbaren Schieber (3) auf einem in Längsrichtung (L) verlängerten Halter (2) getragen wird;
- Anordnen von wenigstens einer Dichtung (4) auf dem Halter (2) entlang der Längsrichtung (L), wobei die wenigstens eine Dichtung (4) einen formveränderlichen Hohlraum (8) aufweist, der in der Lage ist, eine expandierte Konfiguration (A) und wenigstens eine eingefahrene Konfiguration (B) anzunehmen;
- Bearbeiten eines Werkstücks, das auf dem wenigstens einen Werkstück-Spannelement eingespannt ist;
- Anordnen der wenigstens einen Dichtung (4) in der expandierten Konfiguration (A) während des Bearbeitungsschritts, in der die wenigstens eine Dichtung (4) in Kontakt mit dem Halter (2) und dem Schieber (3) ist, um eine Dichtung zwischen dem Schieber (3) und der wenigstens einen Dichtung (4) bereitzustellen;
- Erzeugen einer Vertiefung in dem Hohlraum (8), so dass während des Positionierschritts die wenigstens eine Dichtung (4) die eingefahrene Konfiguration (B) annimmt, in der die wenigstens eine Dichtung (4) derart konfiguriert ist, dass sie den Schieber (3) auf dem Halter (4) entlang der Längsrichtung (L) ohne Reibung zwischen Schieber (3) und Dichtung (4) zu erzeugen bewegt.

15. Verfahren nach Anspruch 14, das nach dem Positionierschritt einen Unterbrechungsschritt umfasst, um den Schritt des Erzeugens einer Vertiefung zu unterbrechen, um die Dichtung (4) dazu zu bringen, wieder die expandierte Konfiguration (A) anzunehmen und die Abdichtung wiederherzustellen; insbesondere umfasst das Verfahren nach dem Unterbrechungsschritt die Erzeugung eines Überdrucks in dem Hohlraum (8), um die Abdichtung zu verbessern.

## Revendications

1. Appareil pour le positionnement d'éléments de maintien de pièce à travailler (1), ledit appareil comprenant :
- au moins un support (2) s'étendant au moins le long d'une direction longitudinale (L) et définissant au moins une zone intérieure (C) devant être protégée d'éléments externes, en particulier de l'entrée d'objets solides ou liquides durant un usinage de la pièce à travailler ;
- au moins un coulisseau (3) qui est configuré pour porter au moins un élément de maintien de pièce à travailler et qui est mobile sur ledit support (2) le long de ladite direction longitudinale (L) pour le positionnement dudit au moins un élément de maintien de pièce à travailler ;
- au moins un joint (4) qui comprend une cavité (8) de forme variable et qui est capable d'adopter une configuration déployée (A), dans laquelle ledit au moins un joint (4) est en contact avec ledit au moins un coulisseau (3) et fournit une fermeture hermétique pour protéger ladite au moins une zone intérieure (C), et au moins une configuration rétractée (B), dans laquelle ledit joint (4) permet audit au moins un coulisseau (3) de se déplacer sur ledit support (2) le long de ladite direction longitudinale (L) sans générer de frottement entre ledit coulisseau (3) et ledit joint (4) ;
- des moyens d'aspiration (7) pour générer une dépression dans ladite cavité (8) de sorte que ledit au moins un joint (4) adopte ladite configuration rétractée (B) .

2. Appareil (1) selon la revendication 1, dans lequel, lorsque la pression dans ladite cavité (8) est égale à la pression atmosphérique, ledit au moins un joint (4) adopte ladite configuration déployée (A).

3. Appareil (1) selon la revendication 1 ou 2 dans lequel ledit au moins un joint (4) adopte ladite configuration déployée (A) lorsqu'une surpression est générée dans ladite cavité (8).

4. Appareil (1) selon l'une des revendications précédentes, comprenant un autre joint (5) qui est opposé audit au moins un joint (4) et qui est capable d'adopter une configuration déployée (A), dans laquelle ledit autre joint (5) est en contact avec au moins un coulisseau (3) et/ou avec ledit au moins un joint (4) et dans laquelle fournit une fermeture hermétique pour protéger ladite au moins une zone intérieure (C), et au moins une configuration rétractée (B), dans laquelle ledit autre joint (5) permet audit au moins un coulisseau (3) de se déplacer sur ledit support (2) le long de ladite direction longitudinale (L) sans générer de frottement entre le coulisseau (3) et ledit autre joint (5) .

5. Appareil (1) selon la revendication 4, dans lequel lesdits autre joint (5) et au moins un joint (4) s'éloignent l'un de l'autre en adoptant lesdites configurations rétractées (B) respectives et s'approchent l'un de l'autre en adoptant lesdites configurations déployées (A) respectives.

6. Appareil (1) selon la revendication 4 ou 5, dans lequel lesdits au moins un joint (4) et autre joint (5) s'étendent le long de ladite direction longitudinale (L) et/ou sont ajustés sur ledit support (2).

7. Appareil (1) selon l'une des revendications 4 à 6, dans lequel ledit autre joint (5) comprend un corps (9) à forme de section creuse étendu le long de ladite direction longitudinale (L), ledit corps (9) comprenant, dans ladite configuration déployée (A), deux côtés obliques (4a), un côté de fermeture hermétique (4b) qui réunit ensemble lesdits deux côtés obliques (4a) et une base (4c) qui est commune auxdits côtés obliques (4a), lesdits deux côtés obliques (4a) étant inclinés avec des inclinaisons opposées de manière à diverger en progressant vers ledit côté de fermeture hermétique (4b), ledit côté de fermeture hermétique (4b) étant déformable de manière à fournir ladite fermeture hermétique dans ladite configuration déployée (A).

8. Appareil (1) selon l'une des revendications précédentes, dans lequel ledit au moins un joint (4) comprend un corps (9) à forme de section creuse s'étendant le long de ladite direction longitudinale (L), ledit corps (9) comprenant, dans ladite configuration déployée (A), deux côtés obliques (4a), un côté de fermeture hermétique (4b) qui réunit ensemble lesdits deux côtés obliques (4a) et une base (4c) qui est commune auxdits côtés obliques (4a), lesdits deux côtés obliques (4a) étant inclinés avec des inclinaisons opposées de manière à diverger en progressant vers ledit côté de fermeture hermétique (4b), ledit côté de fermeture hermétique (4b) étant déformable de manière à fournir ladite fermeture hermétique dans ladite configuration déployée (A).

9. Appareil (1) selon la revendication 7 ou 8, dans lequel, dans ladite configuration rétractée (B), lesdits côtés obliques (4a) sont plus inclinés que dans ladite configuration déployée (A) et ledit côté de fermeture hermétique (4b) est plus aplati que dans ladite configuration déployée (A).

10. Appareil (1) selon l'une des revendications 7 à 9, dans lequel chacun desdits côtés obliques (4a) comprend une partie charnière (6) comprenant un axe de charnière parallèle à ladite direction longitudinale (L), et dans laquelle, pour chacun desdits côtés obliques (4a), ladite partie charnière (6) relie le côté oblique (4b) respectif audit côté de fermeture hermétique (4b).

11. Appareil (1) selon la revendication 10, dans lequel chacune des parties charnières (6) est fabriquée par un amincissement localisé de l'épaisseur.

12. Appareil (1) selon l'une des revendications précédentes, comprenant des moyens de compression reliés audit au moins un joint (4) pour générer une surpression dans ladite cavité (8) pour améliorer la fermeture hermétique dans ladite configuration déployée (A).

13. Centre d'usinage à commande numérique (10), comprenant un plan de travail configuré pour positionner une pièce à travailler, ledit plan de travail comprenant un appareil (1) fabriqué selon l'une des revendications précédentes.

14. Procédé de positionnement d'éléments de maintien de pièce à travailler, comprenant les étapes de :
- positionner au moins un élément de maintien de pièce à travailler dans une position prédéfinie, ledit au moins un élément de maintien de pièce à travailler étant porté par un coulisseau (3) mobile sur un support (2) étendu dans une direction longitudinale (L) ;
- agencer au moins un joint (4) sur ledit support (2) le long de ladite direction longitudinale (L), ledit au moins un joint (4) comprenant une cavité (8) de forme variable qui est capable d'adopter une configuration déployée (A) et au moins une configuration rétractée (B) ;
- usiner une pièce à travailler maintenue sur ledit au moins un élément de maintien de pièce à travailler ;
- durant ladite étape d'usinage, agencer ledit au moins un joint (4) dans ladite configuration déployée (A), dans laquelle ledit au moins un joint (4) est en contact avec ledit support (2) et ledit coulisseau (3) pour fournir une fermeture hermétique entre ledit coulisseau (3) et ledit au moins un joint (4) ;
- générer une dépression dans ladite cavité (8) de sorte que, durant ladite étape de positionnement, ledit au moins un joint (4) adopte ladite configuration rétractée (B) dans laquelle ledit au moins un joint (4) est configuré pour déplacer ledit coulisseau (3) sur ledit support (4) le long de ladite direction longitudinale (L) sans générer de frottement entre le coulisseau (3) et le joint (4).

15. Procédé selon la revendication 14, comprenant, après ladite étape de positionnement, une étape d'interruption pour interrompre ladite étape de générer une dépression de manière à amener ledit joint (4) à adopter ladite configuration déployée (A) et à rétablir la fermeture hermétique ; en particulier, ledit procédé comprenant, après ladite étape d'interruption, de générer une surpression dans ladite cavité (8) de manière à améliorer ladite fermeture hermétique.
